# DEMANDE DE BREVET EUROPEEN

(11) **EP 2 520 343 A2**
(43) Date de publication de la demande: **07.11.2012**
(21) Numéro de dépôt: 12166689.5
(22) Date de dépôt: 03.05.2012
(51) Int. Cl.: A63B 29/02, G05D 1/00, G01S 5/02

(54) **Dispositif et procédé de recherche de cibles**

(30) Priorité: 03.05.2011 FR 1153782
(71) Demandeur: Delta Drone, 38000 Grenoble (FR)
(72) Inventeur: Serre, Frédéric, 38000 Grenoble (FR); Pollin, Guillaume, 38000 Grenoble (FR); Blanc-Paques, Fabien, 38000 Grenoble (FR)
(74) Mandataire: Croonenbroek, Thomas Jakob

(57) **Abrégé**

Les modes de réalisation de la présente invention décrivent un objet volant sans pilote destiné à détecter et localiser au moins une cible émettant un signal permettant la localisation de ladite, au moins une, cible, ledit objet volant comprenant :
- des moyens de géolocalisation ;
- des moyens de mesure de l'intensité du signal émis par ladite, au moins une, cible ;
- des moyens de détermination de la localisation de ladite, au moins une, cible en fonction de la géolocalisation de l'objet volant et de l'intensité du signal mesurée pour une pluralité de points de mesure.

## Description

La présente invention concerne le domaine de la détection et de la localisation de cibles et plus particulièrement le domaine de la recherche de victimes suite à un accident comme par exemple une avalanche.

Dans l'état de la technique, il est connu dans le cas d'avalanches, d'envoyer des sauveteurs sur place et d'utiliser des appareils de recherche de victimes d'avalanches (DVA) en mode détection qui permettent aux sauveteurs de détecter le signal radio-fréquence émis par un DVA en mode émission (si la victime est équipée d'un tel matériel), ainsi que l'utilisation de chiens entraînés à la recherche de victimes et de sondes pour détecter manuellement les victimes.

Cependant, ces méthodes peuvent être fastidieuses à mettre en oeuvre du fait de la possible difficulté d'accès de la zone de recherche et peuvent requérir un temps important de préparation avant de pouvoir être mises en oeuvre du fait du nombre de personnes et du matériel nécessaire.

Or, la durée de vie des victimes étant souvent très limitée, il apparaît donc nécessaire de réduire au maximum le temps nécessaire à la détection et la localisation des victimes de manière à les secourir le plus rapidement possible et ainsi accroître leurs chances de survie.

Le but de la présente invention est donc de surmonter les inconvénients précités de l'état de la technique et de proposer un dispositif et une méthode permettant une localisation efficace et rapide de cibles, correspondant, par exemple à des victimes, même dans des zones difficiles d'accès.

Ainsi, la présente invention concerne un objet volant sans pilote destiné à détecter et localiser au moins une cible émettant un signal permettant la localisation de ladite, au moins une, cible, ledit objet volant comprenant :
- des moyens de géolocalisation ;
- des moyens de mesure de l'intensité du signal émis par ladite, au moins une, cible ;
- des moyens de détermination de la localisation de ladite, au moins une, cible en fonction de la géolocalisation de l'objet volant et de l'intensité du signal mesurée pour une pluralité de points de mesure.

Selon un autre mode de réalisation de la présente invention, l'objet volant comprend également des moyens de guidage autonome dudit objet volant en fonction d'un plan de vol.

Selon un mode de réalisation additionnel, ledit objet volant comprend également des moyens de planification de trajectoire aptes à modifier le plan de vol en fonction de l'intensité du signal émis par ladite, au moins une, cible et mesuré par les moyens de mesure de l'intensité dudit signal.

Selon un mode de réalisation supplémentaire, les moyens de géolocalisation comprennent un récepteur GNSS.

Selon un autre mode de réalisation, les moyens de mesure de l'intensité du signal émis par ladite, au moins une, cible comprennent des moyens de mesure de l'intensité d'un champ électromagnétique émis par ladite, au moins une, cible.

Selon un mode de réalisation additionnel, les moyens de mesure de l'intensité du champ électromagnétique comprennent des moyens de détection d'un signal radio-fréquence émis à 457 kHz.

Selon un mode de réalisation supplémentaire, les moyens de mesure de l'intensité du champ électromagnétique comprennent des moyens de détection d'un signal radio-fréquence émis dans une bande comprise entre 10 et 2500 MHz.

Selon un autre mode de réalisation, ledit objet volant comprend également des moyens de détection d'un rayonnement infra-rouge.

Selon un mode de réalisation additionnel, ledit objet volant comprend également des moyens de communication avec un équipement de contrôle distant de manière à transférer les informations correspondant à la géolocalisation de l'objet volant et à l'intensité du signal émis par la, au moins une, cible vers ledit équipement de contrôle.

Selon un mode de réalisation supplémentaire, le plan de vol est prédéterminé et transmis par l'équipement de contrôle.

Selon un autre mode de réalisation, ledit objet volant comprend également des moyens de détection optique de l'environnement dudit objet volant destinés à réaliser des prises de vue de l'environnement de l'objet volant et dans lequel les moyens de planification de trajectoire sont aptes à modifier le plan de vol en fonction des prises de vue réalisées par les moyens de détection optique de l'environnement.

Selon un mode de réalisation additionnel, ledit objet volant comprend également des moyens de marquage au sol destinés à repérer la localisation de la, au moins une, cible détectée.

Selon un mode de réalisation supplémentaire, les moyens de marquage comprennent des moyens de dépôt de peinture au sol.

Selon un autre mode de réalisation additionnel, les moyens de marquage comprennent des moyens de dépôt d'un fumigène au sol.

Selon un mode de réalisation supplémentaire, les moyens de marquage comprennent des moyens de dépôt d'une balise sonore au sol.

Selon un autre mode de réalisation, les moyens de marquage comprennent des moyens de dépôt d'une balise radiofréquence au sol.

Les modes de réalisation de la présente invention concernent également un procédé de recherche de victimes d'avalanches utilisant un objet volant selon l'une des revendications précédentes dans lequel ladite, au moins une, cible correspond à au moins une victime ou un dispositif émetteur d'un signal permettant la localisation de ladite, au moins une, victime et dans lequel ledit objet volant effectue un survol d'une zone de recherche où a eu lieu une avalanche et détermine la localisation de la, au moins une, victime en fonction de l'intensité mesurée du signal pour une pluralité de points de mesure dans la zone de recherche.

Selon un autre mode de réalisation, le plan de vol de l'objet volant est un plan de vol prédéterminé en fonction de la zone de recherche, ledit plan de vol étant modifié en fonction de l'intensité mesurée du signal permettant la localisation de la, au moins une, victime.

Selon un mode de réalisation additionnel, le signal permettant la localisation de la, au moins une, victime correspond à un champ électromagnétique émis par ladite au moins une cible.

Selon un mode de réalisation supplémentaire, la zone de recherche est déterminée par des moyens de détection optique de l'environnement de l'objet volant.

Selon un autre mode de réalisation, les points de mesure de l'intensité du champ électromagnétique sont réalisés à au moins deux altitudes différentes de l'objet volant afin de déterminer la profondeur de ladite, au moins une, victime sous la neige.

Selon un mode de réalisation additionnel, les deux altitudes différentes correspondent à une altitude de 10 mètres et une altitude de 20 mètres.

Selon un mode de réalisation additionnel, ledit objet volant comprend également un moyen de communication audio bidirectionnel destiné à établir une communication avec ladite, au moins une, victime.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma du drone et de ses éléments ainsi que de la cible selon un premier mode de réalisation;
- la figure 2 représente un schéma du drone et de ses éléments ainsi que de la cible selon un deuxième mode de réalisation ;
- la figure 3 représente un logigramme des différentes étapes du procédé selon un mode de réalisation de la présente invention ;
- la figure 4a représente une prise de vue à partir du drone ;
- la figure 4b représente la prise de vue de la figure 4a pour laquelle une zone de recherche a été déterminée par traitement d'images ;
- la figure 5 représente un exemple de trajectoire obtenue pour une zone de recherche rectangulaire ;
- la figure 6 représente un exemple de détection de la position approximative de trois victimes dans la zone de recherche ;
- la figure 7 représente un exemple de trajectoire pour une détection précise de la position des victimes ;
- la figure 8 représente un exemple de détermination de la position précise d'une victime par triangulation ;
- la figure 9 représente un exemple de trajectoire en spirale conique permettant d'obtenir des mesures proches de la cible et à différentes altitudes pour obtenir une localisation précise de la cible et de connaître la profondeur à laquelle se trouve la cible ;

Sur toutes ces figures, les mêmes éléments portent les mêmes numéros de référence.

Dans la suite de la description, on désigne de façon générale :
Le terme « GNSS » correspond à l'acronyme anglais « Global Navigation Satellite System » et correspond à un ensemble de système de géolocalisation mondial utilisant un ensemble de satellites.

Le terme « drone » dans le cadre de la présente invention correspond à un objet volant sans pilote, par exemple un avion ou un hélicoptère, ayant généralement une taille et un poids réduits. Le guidage dudit objet volant se faisant de manière télécommandé ou de manière programmé. Dans ce dernier cas, l'objet volant peut suivre un plan de vol de manière autonome.

Le terme « DVA » correspond à l'acronyme français Détecteur de Victimes en Avalanches et définit un équipement comprenant deux modes distincts : un mode émission qui émet en continu un signal radio-fréquence à 457 kHz et un mode qui détecte un signal radio-fréquence émis à 457 kHz.

Les modes de réalisation de la présente invention concernent un objet volant sans pilote ou drone 1 destiné à la détection et à la localisation de cibles 3.

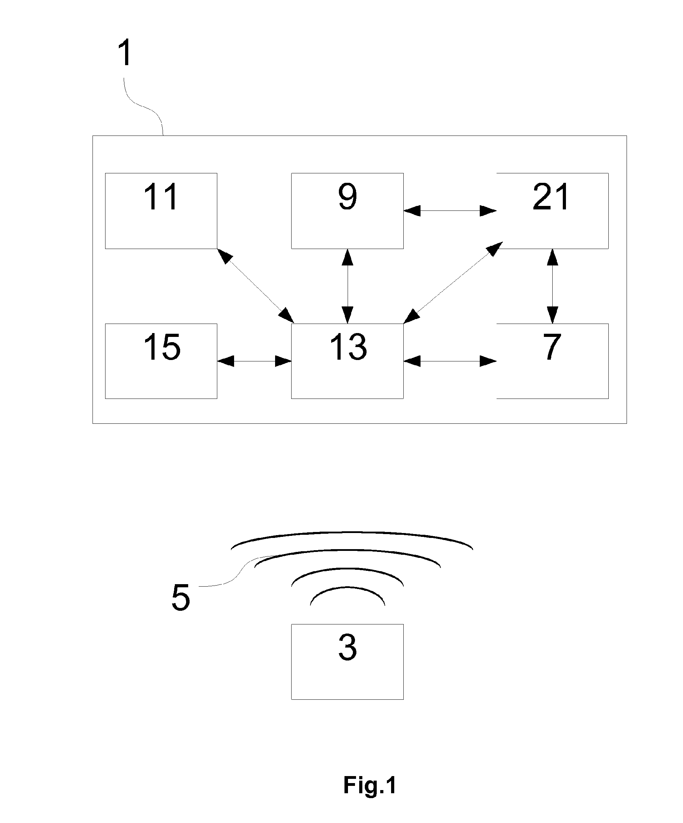

La figure 1 représente un schéma des différents équipements du drone 1 et d'une cible 3 dont on veut détecter la localisation.

Les cibles 3 correspondent par exemple à des personnes ou des équipements portés par des personnes qui peuvent être enfouis par exemple sous la neige dans le cadre d'avalanches.

De plus, les cibles 3 émettent un signal 5 qui peut être détecté par des moyens de mesure 7 situés au niveau du drone 1. Ces moyens de mesure 7 détectent l'intensité et éventuellement la direction de l'origine du signal 5 émis par une cible 3 de sorte qu'ils permettent d'estimer la position de la cible 3 par rapport au drone 1.

Par ailleurs, le drone 1 comprend des moyens de géolocalisation 9 comme par exemple un récepteur GNSS. Ainsi, à partir de la géolocalisation du drone 1 et de l'estimation de la position d'une cible 3 par rapport au drone 1, la localisation ou géolocalisation d'une cible 3 peut être estimée.

Dans la suite de la description, on se limitera aux drones 1 pilotés de manière programmée de sorte que le drone 1 comprend également des moyens de guidage autonome 11 qui lui permettent de voler de manière programmée en suivant un plan de vol prédéfini. Le plan de vol est établi, par exemple, en fonction d'une zone de recherche spécifiée par un opérateur et d'une trajectoire déterminée pour couvrir la zone de recherche de manière optimale, ladite trajectoire pouvant par exemple être déterminée par des moyens de planification de trajectoire 13 en fonction de la taille et de la forme de la zone de recherche.

De plus, selon un mode de réalisation de la présente invention, la zone de recherche est définie à partir de moyens de détection optique 15. Dans ce cas, un traitement est réalisé, par exemple par des moyens de traitement 21, sur les images fournies par les moyens de détection optique 15 de manière à définir la zone de recherche. Les moyens de planification de trajectoire 13 déterminent alors un plan de vol à partir des informations fournies par les moyens de traitement 21 des images fournies par les moyens de détection optique 13. Le traitement des images correspond, par exemple, à une analyse spectrale de l'image par transformée de fourrier rapide (Fast Fourier Transform (FFT) en anglais) pour détecter une rupture de relief.

Une fois le plan de vol établi par les moyens de planification de trajectoire 13, ce plan de vol est transmis et appliqué par les moyens de guidage autonome 11 pour guider le drone 1.

De plus, lors du survol de la zone de recherche, le plan de vol peut être modifié en fonction de l'intensité du signal 5 détecté par les moyens de mesure 7. Dans ce cas, les informations liées au signal mesuré par les moyens de mesure 7 sont envoyées vers les moyens de planification de trajectoire 13 qui déterminent alors un nouveau plan de vol et transmettent aux moyens de guidage autonome 11 ce nouveau plan de vol de manière à effectuer plus de mesures dans la zone où une cible 3 potentielle a été détectée afin de localiser précisément la cible 3 potentielle.

Lorsqu'une cible 3 potentielle est détectée, c'est-à-dire lorsque l'intensité du signal mesuré par les moyens de mesure dépasse un seuil prédéterminé, le plan de vol est modifié et peut alors correspondre à une trajectoire en spirale dont le rayon diminue entre un rayon maximal prédéterminé et un rayon minimal prédéterminé. Le rayon maximal est défini en fonction du plan de vol initial et le rayon minimal correspond par exemple au rayon minimal que peut effectuer le drone 1. Le centre de la spirale peut également être modifié en fonction de l'intensité du signal détecté si l'intensité du signal mesurée sur un tour de spirale est inférieure à une intensité mesurée sur un tour de spirale précédent de manière à obtenir une spirale centrée sur la cible. De plus, la trajectoire en spirale peut couvrir différentes altitudes pour pouvoir déterminer précisément la position de la cible 3 à partir des informations collectées par les moyens de mesure 7.

Les différentes types de cibles 3 et les moyens de mesure 7 du signal 5 émis par ces cibles 3 vont à présent être décrit en détails :
- la cible 3 peut être un individu qui émet un champ électromagnétique dans le domaine infra-rouge du fait de sa température, les moyens de mesure 7 comprennent alors des moyens de réalisation d'imagerie thermique à l'aide d'un micro-bolomètre qui permettent de détecter une source de chaleur comme un corps humain, même enfoui sous la neige.
- la cible 3 peut être un équipement dédié à la localisation de personnes comme par exemple un appareil de recherche de victimes d'avalanches (DVA) en mode émission, les moyens de mesure 7 comprennent alors un DVA en mode détection.
- la cible 3 peut être un téléphone portable qui émet un signal radio-fréquence dans une bande comprise entre 10 et 2500 MHz, les moyens de mesure 7 comprennent alors des antennes directives permettant de mesurer l'intensité d'un champ électromagnétique et de déterminer la direction de propagation du champ magnétique par couplage magnétique.

Il est à noter que l'invention ne se limite pas aux moyens de mesure 7 précités de sorte, par exemple, que des moyens de mesure 7 d'un signal 5 acoustique émis par une cible 3 peuvent également être envisagés.

Le drone 1 est donc équipé d'une combinaison des moyens de mesure 7 précédemment décrits. Ainsi, si le drone 1 est équipé de moyens de mesure 7 correspondant à la détection de différents types de signaux, un couplage des informations correspondant aux différents types de signaux peut être réalisé de manière à améliorer la vitesse de détection et la précision de détection des cibles 3. En effet en regroupant les informations correspondant à un signal issu d'un téléphone et à un signal issu d'un DVA, la qualité de la localisation sera d'autant plus précise, rapide et fiable.

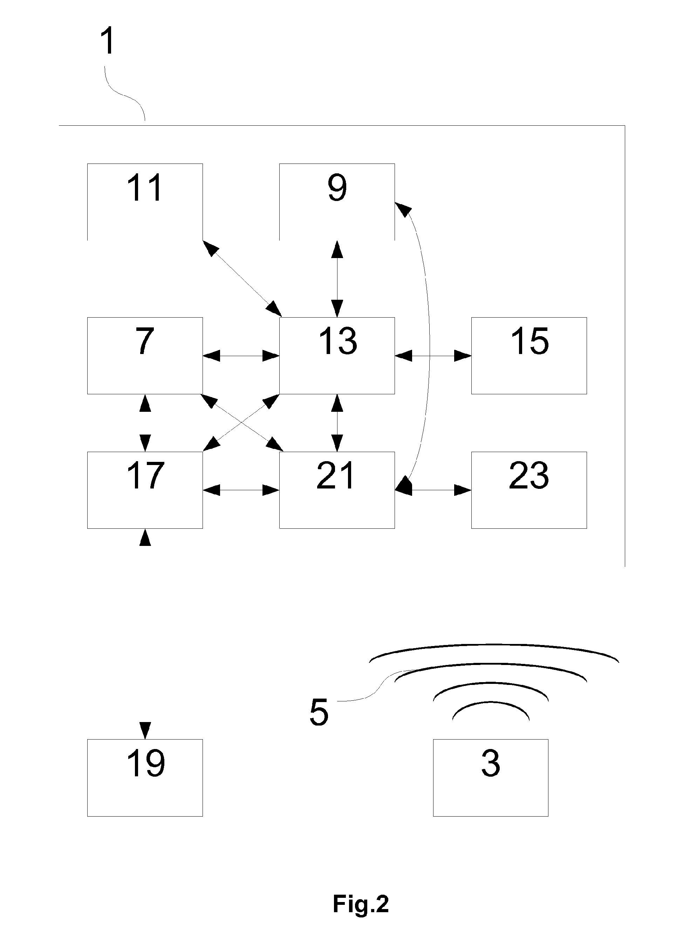

Selon un mode de réalisation représenté sur la figure 2, le drone 1 est également équipé de moyens de communication 17 avec un équipement de contrôle 19 distant, par exemple un ordinateur situé dans un poste de contrôle ou au niveau de la zone de décollage du drone 1. Ces moyens de communication 17 permettent par exemple d'envoyer un plan de vol au drone 1 ou au drone 1 d'envoyer des informations sur la zone de recherche et de transférer vers l'équipement de contrôle 19 les informations correspondant à la géolocalisation du drone 1 et/ou à la localisation des cibles 3.

Ainsi, les calculs de détermination de la position des cibles 3 à partir de la géolocalisation du drone 1 et des informations collectées par les moyens de mesure 7, c'est-à-dire l'intensité et/ou la direction d'un champ électromagnétique dans le présent exemple, peuvent être réalisés au niveau du drone 1 ou au niveau de l'équipement de contrôle 19.

Dans le premier cas, le drone 1, par l'intermédiaire de moyens de traitement 21, détermine, à partir des informations collectées la position des cibles 3 détectées et transmet les coordonnées correspondant à la latitude, la longitude et l'altitude des cibles 3.

Dans le deuxième cas, le drone 1 transmet les informations correspondant aux mesures effectuées par les moyens de mesure 7 et la géolocalisation du drone 1 déterminée par le module GNSS 9 correspondante au moment des mesures de sorte que l'équipement de contrôle 19 peut effectuer le traitement nécessaire pour obtenir la position des cibles 3. Une cartographie de la zone de recherche avec les positions des cibles peut également être réalisée.

En pratique, le drone 1 peut réaliser les calculs simples pour déterminer la position des cibles 3 puis transmettre l'ensemble des données à l'équipement de contrôle 19 qui réalise alors un traitement détaillé des informations transmises par le drone 1.

Par ailleurs, dans le cas où les cibles 3 sont des victimes, afin de faciliter le travail des secours, le drone 1 peut également comprendre des moyens de marquage 23 destinés à effectuer un marquage au sol au niveau d'une cible 3 détectée. Ces moyens de marquage 23 peuvent par exemple être :
- un dépôt de peinture au sol, de préférence d'une couleur vive et différente de la couleur du sol comme par exemple du orange si le sol est de la neige ;
- un dépôt d'un fumigène déposé sur le sol au niveau de la position de la cible détectée ;
- un dépôt d'une balise sonore ou radio-fréquence ;

Ainsi, dans le cas où les cibles 3 sont des victimes, ces moyens de marquage 23 permettent aux sauveteurs de connaître rapidement et précisément la localisation des victimes.

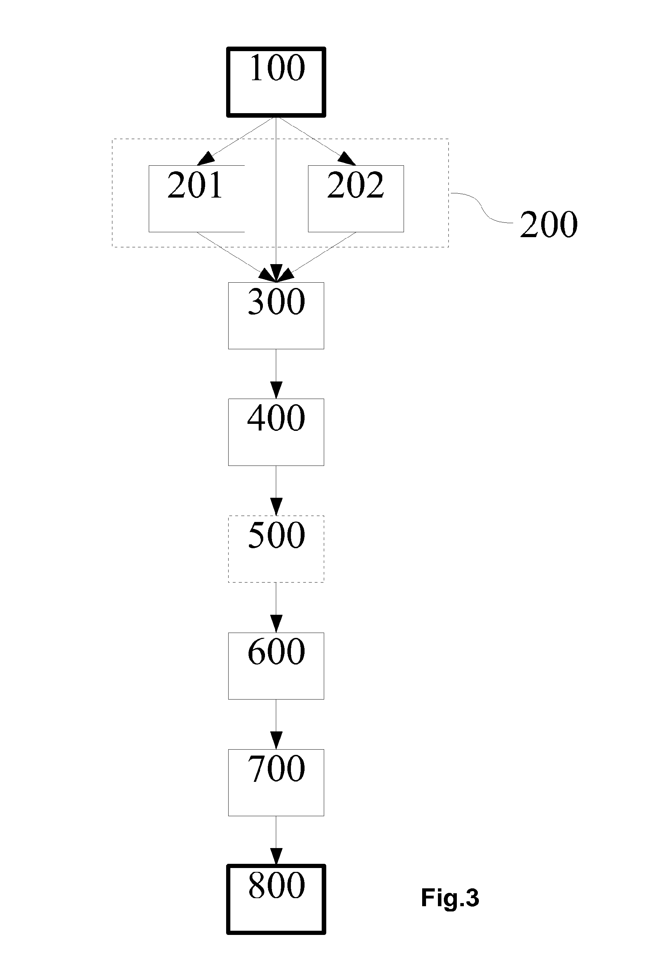

La figure 3 représente les différentes étapes d'une méthode de recherche de cibles 3 selon un mode de réalisation de la présente invention.

La première étape 100 correspond au lancement de la méthode de recherche de cibles 3 à l'aide d'un drone 1.

La deuxième étape 200 correspond à la définition de la zone de recherche et comprend différentes alternatives :
- Selon un première alternative, la zone de recherche est déjà connue au moment du lancement de la méthode (étape 100) de sorte que les coordonnées de la zone sont déjà fournies aux moyens de planification de trajectoire 13, on passe alors directement à l'étape 300.
- Selon une deuxième alternative, les coordonnées de la zone sont transmises au drone 1 à partir de l'équipement de contrôle 19 par le biais des moyens de communication 17 (étape 201), les moyens de communication 17 étant aptes à transmettre ces coordonnées aux moyens de planification de trajectoire 13.
- Selon une troisième alternative, les coordonnées de la zone de recherche sont déterminées à partir des informations fournies par les moyens de détection optique 15 (étape 202), les dites informations sont alors traitées par les moyens de planification de trajectoire 13 pour déterminer les coordonnées de la zone de recherche.

De plus, il est à noter, qu'une combinaison de ces moyens de détermination de la zone de recherche peut également être utilisée. Ainsi, les images obtenues par les moyens de détection optique 15 peuvent être transmises à l'équipement de contrôle 19 pour être analysées puis l'équipement de contrôle 19 peut renvoyer les coordonnées de la zone de recherche déterminées à partir des images fournies.

La troisième étape 300 correspond à l'établissement du plan de vol à partir des coordonnées de la zone de recherche par les moyens de planification de la trajectoire 13 et la transmission de ce plan de vol aux moyens de guidage autonome 11 pour diriger le drone 1 selon le plan de vol établi.

La quatrième étape 400 correspond à la prise de mesure par le moyens de mesure 7 lors du survol de la zone de recherche pour détecter un signal 5 émis par une cible 3. La fréquence des mesures peut être établie en fonction de la taille de la zone de recherche, des capacités des moyens de mesure 7 et/ou de réglages prédéterminés. De plus, l'altitude de survol du drone 1 peut être ajustée en fonction de la portée des moyens de mesure 7.

La cinquième étape 500 est une étape qui peut être facultative selon le mode de réalisation choisi et qui correspond au traitement des mesures effectuées par les moyens de mesure 7 de manière à obtenir les coordonnées de la position des cibles 3. Cette étape peut être réalisée de manière simultanée pendant toute la durée des mesures ou une fois la prise de mesures terminée.

La sixième étape 600 correspond à la transmission des résultats de mesure et/ou des coordonnées des cibles 3 (en fonction de l'étape 500) vers l'équipement de contrôle 19. Cette étape peut être réalisée simultanément à l'étape 400 de sorte que les mesures et/ou coordonnées sont transmises vers l'équipement de contrôle 19 au fur et à mesure que les mesures sont acquises ou alors après l'étape 400 (ou 500), dans ce cas, l'ensemble des mesures et/ou des coordonnées sont transmises vers l'équipement de contrôle 19 après la réalisation de l'ensemble des mesures.

La septième étape 700 correspond au marquage de la position des cibles 3. Cette étape nécessite la réalisation de l'étape 500 ou le renvoi par l'équipement de contrôle 19, après traitement des mesures transmises à l'étape 600, de la position des cibles 3. Ce marquage peut être réalisé à la fin lorsque l'ensemble des cibles sont repérées ou en même temps que les étapes 400 et 500, dans ce cas, à chaque détermination de la position d'une cible 3, un marquage de la position de la cible 3 est réalisé.

La huitième étape 800 correspond à la fin de la méthode de recherche de cibles 3 et le retour à terre du drone 1.

Afin de mieux comprendre les différents aspects de la présente invention, un exemple de réalisation correspondant à la recherche de victimes d'une avalanche va maintenant être décrit en détails.

Une avalanche est détectée sur une montagne. Néanmoins, la localisation précise de la coulée de neige ne peut être déterminée de façon précise par les secours. En effet, si l'avalanche se déclenche dans une zone non visible par les secouristes et non équipée d'un dispositif de surveillance optique, la localisation précise peut ne pas être possible.

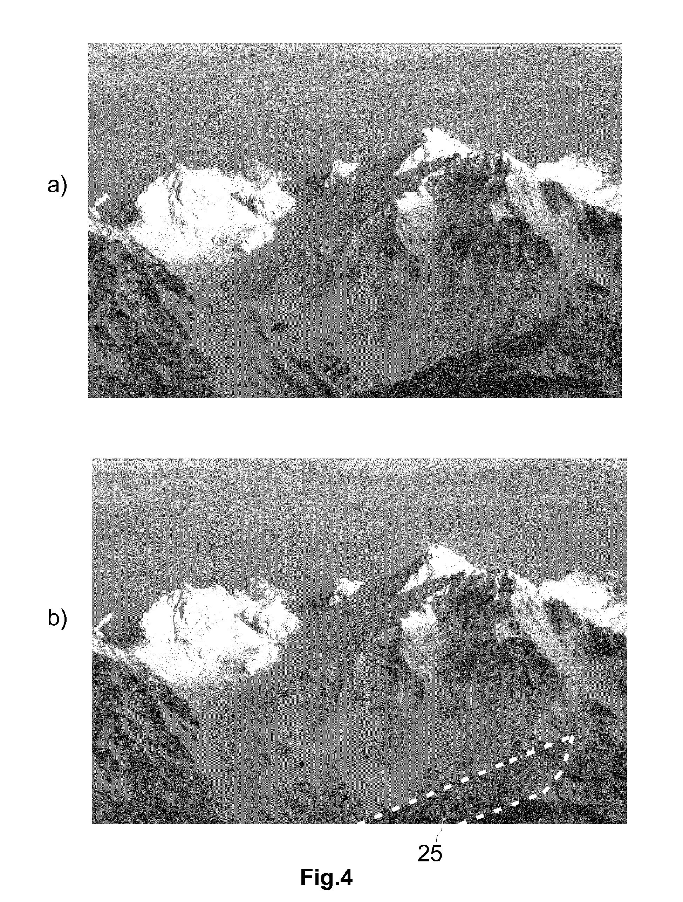

Un drone 1 selon les modes de réalisation décrits précédemment est alors envoyé vers la zone où s'est déclenchée l'avalanche. Le drone 1 réalise alors, par l'intermédiaire de ses moyens de détection optique 15, des prises de vue telle que celle présentée sur la figure 4a et réalise un traitement de ces prises de vue de manière à détecter la localisation précise de la coulée de neige et définir ainsi une zone de recherche 25 de victimes comme représenté par la zone délimitée par les pointillés sur la figure 4b.

De plus, les prises de vue peuvent être transmises à un équipement de contrôle 19 situé au niveau du poste de secours de manière à faciliter l'organisation des secours (détermination de l'importance de l'avalanche, détermination de la facilité d'accès au site...).

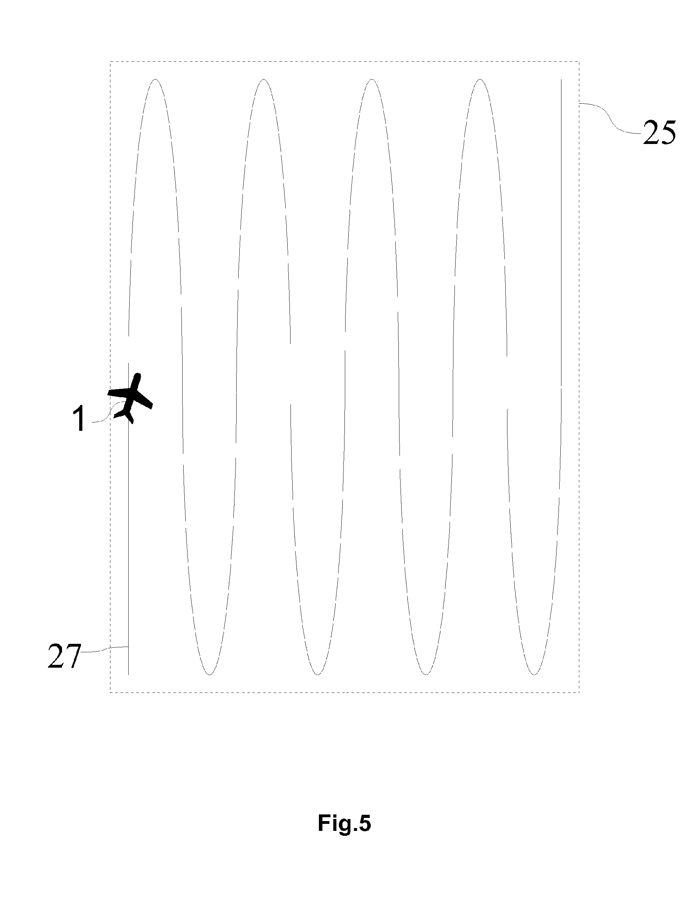

La figure 5 représente un exemple de zone de recherche 25 rectangulaire établie à partir des images fournies par les moyens de détection optique 15. Une trajectoire optimale 27 est alors calculée de manière à couvrir la zone de recherche 25 le plus efficacement possible, comme par exemple un serpentin. Cette trajectoire 27 est établie notamment en fonction de la taille de la zone de recherche 25 et de la portée des moyens de mesure 7 pour couvrir l'ensemble de la zone de recherche dans un minimum de temps. De plus l'altitude de survol du drone 1 est déterminée, par exemple en fonction du relief et de la végétation ou de la portée des moyens de mesure 7. Cette altitude est par exemple comprise entre 5 et 20 mètres de hauteur au dessus du sol. La fréquence des mesures est également déterminée et peut être ajustée en fonction de la vitesse du drone 1 par exemple.

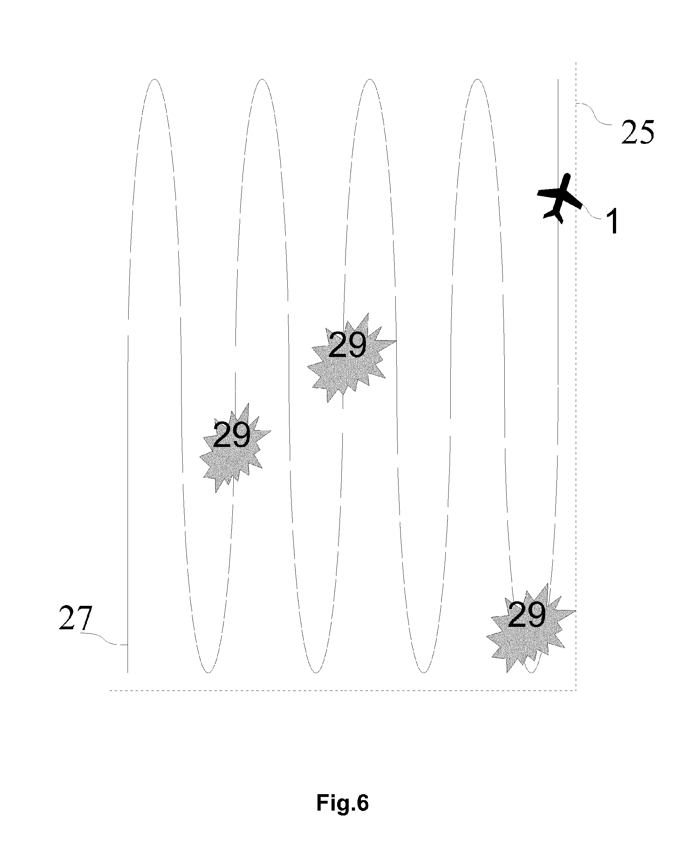

Selon un premier mode de réalisation dans lequel on cherche seulement la position approximative des victimes, la zone de recherche 25 est couverte entièrement à une hauteur de 20 mètres et en fonction de l'intensité du signal mesuré, une zone approximative de position des victimes 29 peut être déterminée comme représenté sur la figure 6 dans le cas où trois victimes potentielles sont détectées.

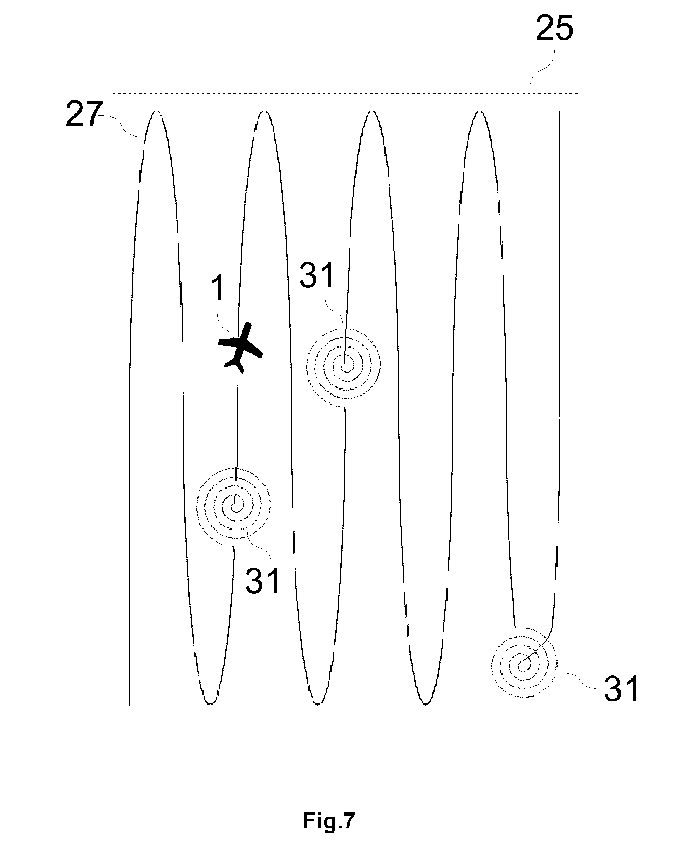

Selon un deuxième mode de réalisation, afin de déterminer la localisation exacte des victimes, lorsqu'un signal correspondant à une victime potentielle est détecté, c'est-à-dire lorsque l'intensité du signal mesuré dépasse un seuil prédéterminé, le plan de vol du drone 1 est modifié et le drone 1 suit une trajectoire en spirale 31 qui se resserre de plus en plus autour de la zone où le signal correspondant à une victime potentielle est détecté comme représenté sur la figure 7. Le rayon initial de la spirale peut être déterminé en fonction de la taille du serpentin de la trajectoire initiale et le rayon final de la spirale peut être déterminé en fonction des capacités de virement du drone. Cette trajectoire en spirale 31 permet d'avoir plusieurs points de mesure dans une zone restreinte autour de la victime potentielle de manière à déterminer précisément la localisation de cette dernière.

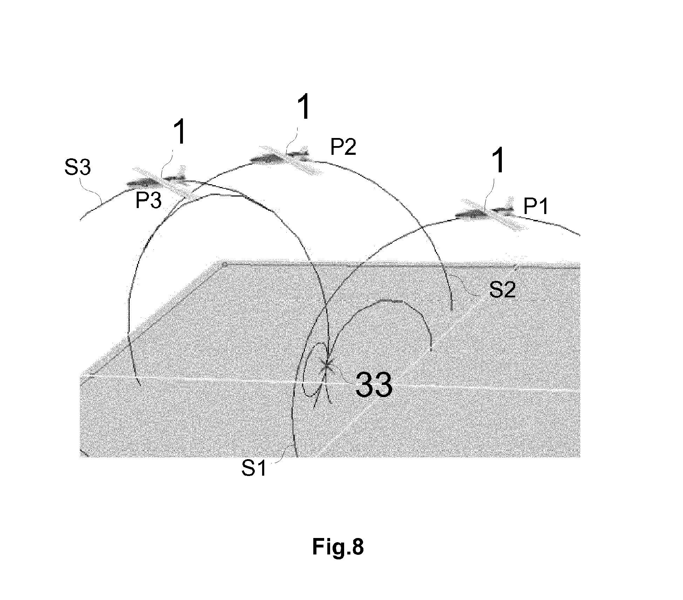

En effet, en ayant au moins trois mesures du signal dans une zone proche de la victime, la position de la victime peut être déduite par triangulation. La figure 8 représente le drone 1 pour trois positions P1, P2, P3 correspondant à trois instants T1, T2 et T3 pour lesquels l'intensité du signal est mesurée. Les intensités mesurées permettent de définir la distance entre la victime potentielle et le drone 1 ce qui peut être représenté par les sphères S1, S2 et S3 pour les mesures effectuées aux instants T1, T2 et T3 respectivement. Le point d'intersection 30 des sphères S1, S2 et S3 dont les coordonnées (longitude, latitude et altitude) peuvent être déterminées à partir de la position GNSS du drone 1 aux instants T1, T2 et T3 correspondant alors à la position de la victime potentielle.

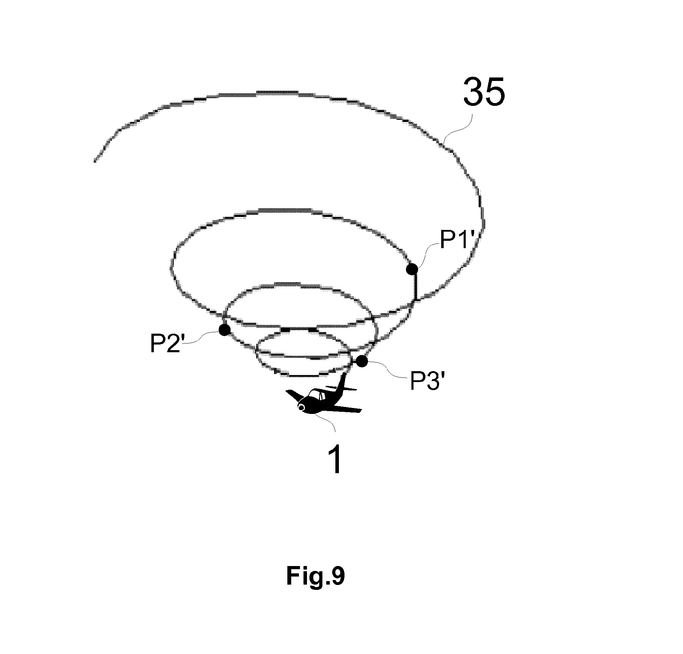

De plus, afin de pouvoir déterminer la profondeur à laquelle la victime est enfouie, les mesures d'intensité du signal émis par la victime ou par son équipement doivent être réalisées à différentes altitudes du drone 1. Pour cela, la trajectoire en spirale 31 peut par exemple être une trajectoire en spirale conique 35 comme représenté sur la figure 9 afin que les, au moins trois, points de mesure (P1', P2', P3') réalisés pour la triangulation soient effectués à des altitudes différentes. L'altitude de départ de la spirale étant par exemple 20 mètres et l'altitude finale de 5 mètres.

Par ailleurs, une fois la position exacte de la victime potentielle déterminée, l'information correspondant à la position de la victime est envoyée vers l'équipement de contrôle 19 et le drone 1 effectue un marquage au sol au niveau de la position localisée par l'un des moyens de marquage 23 décrits précédemment et reprend le survol de la zone de recherche 25 à une hauteur de 20 mètres jusqu'à la détection d'une autre victime potentielle et ainsi de suite jusqu'à ce que la zone de recherche soit entièrement couverte.

D'autre part, si le nombre de victimes est connu le drone peut également modifier son plan de vol lorsque l'ensemble des victimes est détecté.

Ainsi, les modes de réalisation de la présente invention permettent, grâce à l'utilisation d'un drone 1 équipé de moyens de mesure 7 d'un signal 5 émis par une cible 3, de localiser rapidement et précisément cette cible 3. Dans le cas où les cibles 3 sont des victimes d'une avalanche, le temps nécessaire à la localisation des cibles 3 est nettement réduit par rapport aux méthodes traditionnelles de recherche de victimes d'avalanches ce qui permet de dégager plus rapidement les victimes de la neige et qui contribue ainsi à sauver des vies.

Avantageusement, le drone 1 comprend également un moyen de communication audio bidirectionnel destiné à établir une communication avec ladite, au moins une victime.

## Revendications

1. Objet volant sans pilote (1) destiné à détecter et localiser au moins une cible (3) émettant un signal (5) permettant la localisation de ladite, au moins une, cible (3), ledit objet volant (1) comprenant :
- des moyens de géolocalisation (9) ;
- des moyens de mesure (7) de l'intensité du signal (5) émis par ladite, au moins une, cible (3) ;
- des moyens de détermination de la localisation de ladite, au moins une, cible (3) en fonction de la géolocalisation de l'objet volant (1) et de l'intensité du signal (5) mesurée pour une pluralité de points de mesure
- des moyens de guidage autonome (11) dudit objet volant (1) en fonction d'un plan de vol,
- des moyens de planification de trajectoire (13) aptes à modifier le plan de vol en fonction de l'intensité du signal (5) émis par ladite, au moins une, cible (3) et mesuré par les moyens de mesure (7) de l'intensité dudit signal (7), la modification du plan de vol correspondant à une trajectoire en spirale lorsqu'une cible (3) est détectée.

2. Objet volant (1) selon la revendication 1 dans lequel les moyens de mesure (7) de l'intensité du signal émis par ladite, au moins une, cible (3) comprennent des moyens de mesure de l'intensité d'un champ électromagnétique émis par ladite, au moins une, cible (3).

3. Objet volant (1) selon la revendication 2 dans lequel les moyens de mesure de l'intensité du champ électromagnétique comprennent des moyens de détection d'un signal radio-fréquence émis à 457 kHz.

4. Objet volant (1) selon l'une des revendications 2 ou 3 dans lequel les moyens de mesure de l'intensité du champ électromagnétique comprennent des moyens de détection d'un signal radio-fréquence émis dans une bande comprise entre 10 et 2500 MHz.

5. Objet volant (1) selon l'une des revendications 2 à 4 comprenant des moyens de détection d'un rayonnement infra-rouge.

6. Objet volant (1) selon l'une des revendications 1 à 5 dans lequel ledit objet volant (1) comprend également des moyens de détection optique (15) de l'environnement dudit objet volant (1) destinés à réaliser des prises de vue de l'environnement de l'objet volant (1) et dans lequel les moyens de planification de trajectoire (13) sont aptes à modifier le plan de vol en fonction des prises de vue réalisées par les moyens de détection optique (15) de l'environnement.

7. Objet volant (1) selon l'une des revendications précédentes dans lequel ledit objet volant (1) comprend également des moyens de marquage au sol (23) destinés à repérer la localisation de la, au moins une, cible détectée.

8. Objet volant (1) selon la revendication 7 dans lequel les moyens de marquage comprennent des moyens de dépôt d'un fumigène au sol.

9. Objet volant (1) selon l'une des revendications 7 ou 8 dans lequel les moyens de marquage comprennent des moyens de dépôt d'une balise sonore ou radiofréquence au sol.

10. Procédé de recherche de victimes d'avalanches utilisant un objet volant (1) selon l'une des revendications précédentes dans lequel ladite, au moins une, cible (3) correspond à au moins une victime émettrice d'un signal ou un dispositif émetteur d'un signal permettant la localisation de la, au moins une, victime et dans lequel ledit objet volant (1) effectue un survol d'une zone de recherche (25) où a eu lieu une avalanche et détermine la localisation de ladite, au moins une, victime en fonction de l'intensité mesurée du signal (5) pour une pluralité de points de mesure dans la zone de recherche (25).

11. Procédé de recherche selon la revendication 10 dans lequel le plan de vol de l'objet volant (1) est un plan de vol prédéterminé en fonction de la zone de recherche (25), ledit plan de vol étant modifié en fonction de l'intensité mesurée du signal permettant la localisation de ladite, au moins une, victime.

12. Procédé de recherche selon l'une des revendications 10 ou 11 dans lequel le signal (5) permettant la localisation de la, au moins une, victime correspond à un champ électromagnétique émis par ladite au moins une cible (3).

13. Procédé de recherche selon l'une des revendications 10 à 12 dans lequel la zone de recherche (25) est déterminée par des moyens de détection optique (15) de l'environnement de l'objet volant (1).

14. Procédé de recherche selon l'une des revendications 12 ou 13 dans lequel les points de mesure de l'intensité du champ électromagnétique sont réalisés à au moins deux altitudes différentes de l'objet volant (1) afin de déterminer la profondeur de la, au moins une, victime sous la neige, les deux altitudes étant comprises entre 5 et 20 mètres d'altitude.
